Europäisches Patentamt

European Patent Office

Office européen des brevets

(11) Veröffentlichungsnummer: **0 307 744**
**A2**

(12) **EUROPÄISCHE PATENTANMELDUNG**

(21) Anmeldenummer: **88114441.4**

(22) Anmeldetag: **05.09.88**

(51) Int. Cl.⁴: **F26B 3/08 , F26B 23/00**

(30) Priorität: 14.09.87 AT 2315/87
14.09.87 AT 2316/87

(43) Veröffentlichungstag der Anmeldung:
**22.03.89 Patentblatt 89/12**

(84) Benannte Vertragsstaaten:
**AT BE CH DE FR GB IT LI LU NL SE**

(71) Anmelder: **WAAGNER-BIRO
AKTIENGESELLSCHAFT
Stadlauer-Strasse 54 Postfach 11
A-1221 Wien(AT)**

(72) Erfinder: **Beckmann, Georg, Dipl.-Ing. Dr.
Jacquingasse 55/10
A-1030 Wien(AT)**
Erfinder: **Hillinger, Bruno, Dipl-Ing. Dr.
Dreisteingasse 20
A-2371 Hinterbrühl(AT)**

(74) Vertreter: **Wallner, Gerhard, Dipl.-Ing.
c/o Waagner-Biro Aktiengesellschaft
Patentabteilung Stadlauer-Strasse 54
Postfach 11
A-1221 Wien(AT)**

(54) **Wirbelbetttrocknungsanlage für Schüttgüter.**

(57) Die Erfindung betrifft eine Trocknungsanlage mit eigener Energieversorgung, insbesondere einem Wirbelbetttrockner mit eingebauten Heizflächen 4 für kondensierenden Heizdampf, wobei das Schüttgut des Trockners 1 von den Abgasen eines Dampferzeugers 2 und/oder den im Kreislauf geführten Brüden vor deren Abführung ins Freie fluidisiert wird. Der im Dampferzeuger 2 erzeugte Dampf wird in einer Gegendruckturbine 3 entspannt, und der entspannte Dampf in den Heizflächen 4 des Trockners 1 kondensiert. Wird als zu trocknendes Gut Kohle oder ein anderer Brennstoff verwendet, so wird ein Teil des getrockneten Schüttgutes im Dampferzeuger verbrannt, wodurch die Anlage energieautark ist.

Fig. 1

### Wirbelbetttrocknungsanlage für Schüttgüter

Die Erfindung betrifft eine Wirbelbetttrocknungsanlage für Schüttgüter, insbesondere für grubenfeuchte Braunkohlen, mit im Wirbelbett eingebauten Heizflächen für teilweise in einer Gegendruckturbine entspannten Heizdampf und einem Dampferzeuger für energieautarken Betrieb.

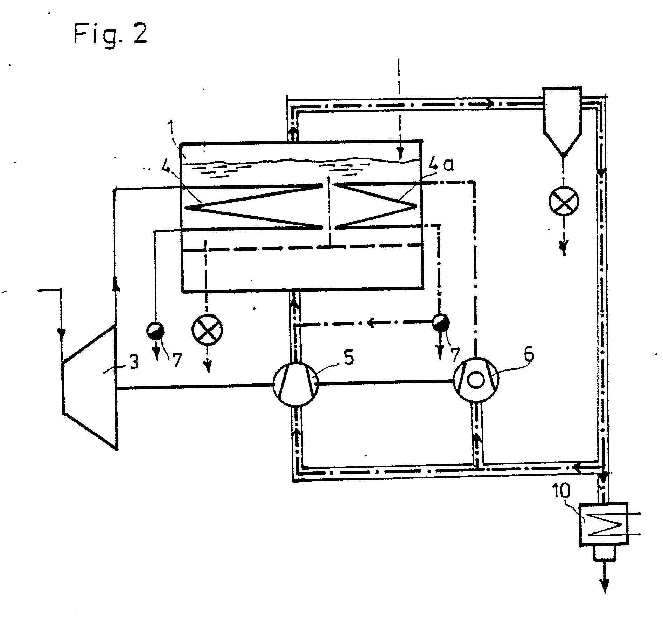

Die DE-OS 29 01 723 offenbart in Fig. 2 die Einbeziehung eines Kohlentrockners in ein kalorisches Kraftwerk, wobei ein Teil des erzeugten Dampfes zur Fluidisierung der zu trocknenden Kohle verwendet wird. Dies bedeutet einen Verlust an Reinkondensat, wodurch eine verstärkte Wasseraufbereitung notwendig ist. Darüber hinaus bedingt die Trocknung in Sattdampfatmosphäre, solange das zu trocknende Gut kälter als der Sattdampf ist, eine Dampfkondensation am zu trocknenden Gut, der erst durch steigende Trocknungstemperatur begegnet werden kann. Aus der AT-PS 345.769 ist es bekannt, den Trockner als Wirbelbetttrockner auszubilden, wobei das Wirbelbett durch Heizflächen beheizt wird, in welchen ein kondensierender Dampf strömt. Der vom Wirbelbett abströmende Brüden wird gereinigt, wobei der überschüssige Dampf kondensiert wird, so daß die zirkulierende Brüdenmenge konstant bleibt. In der Praxis hat es sich als nachteilig herausgestellt, daß die Trocknungsanlage relativ wertlosen Sattdampf benötigt, der aber meistens an den Abbaustätten nicht vorhanden ist, und daher separat hergestellt werden muß. Dazu kommt noch, daß der Einsatz von Strom relativ teuer ist, so daß es für Industriebetriebe günstig ist, zur eigenen Energieerzeugung überzugehen bzw. den nicht benötigten Strom an das Netz zu verkaufen.

Die Erfindung hat es sich zur Aufgabe gestellt, diesem Aufgabenkreis nachzukommen und die Anlage im wesentlichen energieautark zu betreiben, so daß ein höherwertiges weiterverkaufsfähiges Produkt anfällt, das in der Regel auch im eigenen Betrieb verwendet werden kann.

Die Erfindung ist dadurch gekennzeichnet, daß zur zumindest teilweisen Fluidisierung des Wirbelbettes zumindest ein Teil des Abgases des Dampferzeugers und/oder der rezirkulierten und verdichteten Brüde des Trockners und zur Beheizung des Wirbelbettes zumindest teilweise die Kondensationswärme des im Dampferzeuger erzeugten Dampfes verwendet wird und daß die anfallenden Rein- und Schmutzkondensate getrennt gesammelt werden.

Vorzugsweise wird ein Teil der getrockneten Schüttgüter, insbesondere deren Feinfraktion, als Brennstoff im Dampferzeuger verbrannt. Durch die energieautarke Auslegung ist der Aufstellungsort weitgehend von der Energiezufuhr unabhängig und kann daher freier gewählt werden, so daß die Transportkosten für das getrocknete und auch das zu trocknende Schüttgut auf einem Minimum gehalten werden können. So ist es durchaus möglich, die Trocknungsanlage an der Grube zu errichten, ohne daß eine große Infrastruktur für die Anlage notwendig ist.

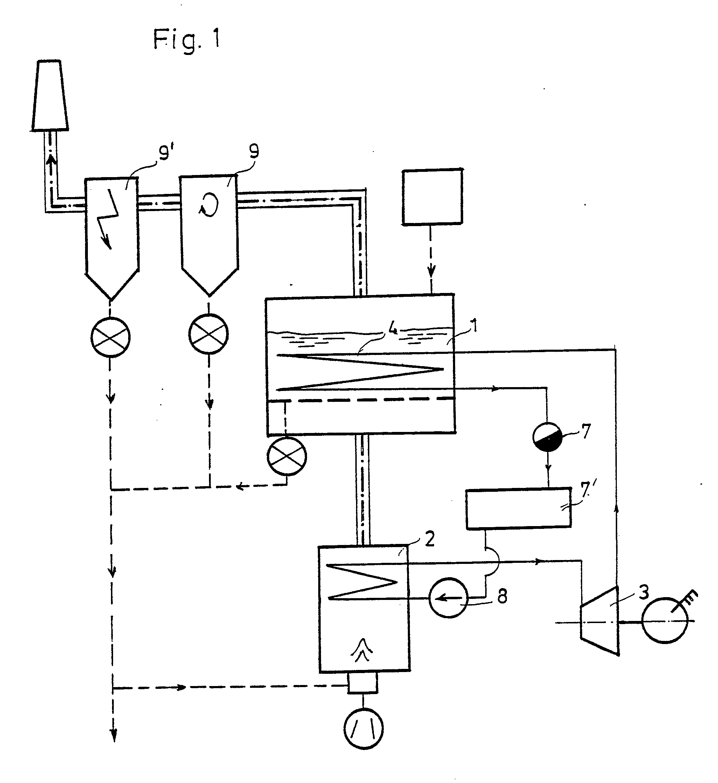

In den angeschlossenen Fig. 1 und 2 ist die Erfindung in Form zweier Schaltbilder beispielsweise und schematisch dargestellt. Fig. 1 zeigt einen Trockner, der mit einem Dampferzeuger 2 rauchgasseitig direkt verbunden ist und mit erhöhtem Brennkammerdruck arbeitet, während dampfseitig zwischen Dampferzeuger 2 und Trockner 1 eine Gegendruckturbine 3 angeordnet ist, in der der überhitzte Dampf bis ins Satt- bzw. Naßdampfgebiet abgearbeitet wird, und sozusagen der benötigte Kondensator als Heizfläche 4 im Trockner angeordnet ist. Das entstehende Kondensat wird im Kondensatabscheider 7 bzw. im Kondensatsammelgefäß 7′ aufgefangen und über die Speisepumpe 8 wieder dem Dampferzeuger zugeführt, wodurch ein geschlossener Kreislauf gegeben und die Reinheit des Kondensats gewährleistet ist. Der Dampferzeuger 2 wird mit geringem Überdruck des Rauchgases gefahren, wodurch einerseits die Heizflächen im Dampferzeuger infolge des besseren Wärmeüberganges kleiner werden und andererseits der Rauchgasüberdruck durch den Druckverlust beim Fluidisieren im Trockner weitestgehend aufgebraucht wird, ohne daß hier ein zusätzliches Gebläse notwendig ist. Wichtig ist, daß der Trockner 1 direkt nach dem Dampferzeuger, aber noch vor der Abgasreinigungsanlage 9 und 9′ angeordnet wird, so daß auch der Staub aus dem Trockner in den Brennkammerstaub sowie ein Teil der Schadgase eingebunden wird, wodurch der Umweltschutz durch eine gemeinsame Abgasreinigungsanlage 9, 9′ vollkommene Beachtung finden kann.

Im Schaltbild werden alle trocken abgeschiedenen Stäube und auch das getrocknete Gut gesammelt, wobei ein Teil des erzeugten Trockengutes, insbesondere die Feinfraktion, im Dampferzeuger als Brennmaterial zur Verfügung gestellt wird. Hiebei können im Rahmen der Erfindung auch einzelne Fraktionen direkt der Brennkammer zugeführt werden, wobei der Aschengehalt des Brennstoffes und auch die gesuchte Korngröße des verkaufsfähigen Produktes eine wesentliche Rolle spielen.

Fig. 2 zeigt einen Trockner 1, der durch ein zirkulierendes Fluidisierungsmedium nach dem Wirbelbettprinzip beheizt wird, wobei das Zirkulationsgebläse 5 durch eine Gegendruckturbine 3 betrieben wird, deren Abdampf als Sattdampf zur Beheizung des Trockners über die Heizflächen 4 verwendet wird. Diese Maßnahme ermöglicht einen energieautarken Betrieb einer Trocknungsanlage, in dem als einzige notwendige Energie der Dampf des Dampferzeugers 2 (Fig.1) benötigt wird, der unter Umständen von der Abfallenergie des Trockners eventuell von der getrockneten Kohle oder auch vom zu großen oder zu kleinen Korn des zu trocknenden Gutes beheizt wird. Bei der Auslegung eines Dampfkessels spielt es kostenmäßig wenig Rolle, ob nun gewöhnlicher Sattdampf oder leichter überhitzter Dampf mit 10, 30 oder auch mehr bar erzeugt wird. Auch Gegendruckturbinen mit kleiner Leistung liegen preislich in der Größenordnung von Elektromotoren, so daß auch hier keine allzu große Preisverschiebung auftritt , und man noch mit einer Energieart auskommt. Im Rahmen der Erfindung ist es durchaus möglich, zur Entlastung des Zirkulationsgebläses einen Brüdenverdichter 6 zu verwenden, in dem der im Kreislauf geführte Brüden auf höheren Druck komprimiert wird, wodurch allein durch die Verdichtungsarbeit Wärme erzeugt wird, die einen schwach überhitzten Heizdampf höheren als atmosphärischen Drucks ergibt, der einerseits zur Beheizung des Trockners, insbesondere dessen erster Stufe 4a, und andererseits durch Entspannung des entstehenden Kondensats auf etwa Atmosphärendruck zur Fluidisierung des Trockners herangezogen werden kann. Durch diese Maßnahme wird u.a. weniger Energie im Kondensator 10 abgegeben, so daß gegenüber dem reinen Zirkulationsgebläsebetrieb eine weitere Energieersparnis gegeben ist.

Ein wesentlicher Vorteil der Anlage wird darin gesehen, daß sie im geschlossenen Kreislauf betrieben wird, so daß praktisch keinerlei Umweltbelastungen auftreten. Wird die Anlage als Trockner für Kohle, insbesondere Braunkohle, verwendet, so kann dieselbe praktisch an der Grube errichtet werden, sodaß der Transport der erzeugten getrockneten Kohle durch den Wegfall der Bergfeuchte, die oft gewichtsmäßig bis zu 70 % der abgebauten Kohle ausmacht, reduziert werden.

Im Rahmen der Erfindung ist es auch möglich, die Fig. 1 und 2 in einer Anlage zusammenzuschalten.

Ein wesentliches Kennzeichen der Erfindung ist die Trennung von Rein- und Schmutzkondensat, so daß die Wasserwirtschaft erleichtert wird.

## Ansprüche

1) Wirbelbetttrocknungsanlage für Schüttgüter, insbesondere für grubenfeuchte Braunkohlen, mit im Wirbelbett eingebauten Heizflächen für teilweise in einer Gegendruckturbine entspannten Heizdampf und einem Dampferzeuger für energieautarken Betrieb, dadurch gekennzeichnet, daß zur zumindest teilweisen Fluidisierung des Wirbelbettes zumindest ein Teil des Abgases des Dampferzeugers und/oder der rezirkulierten und verdichteten Brüde des Trockners und zur Beheizung des Wirbelbettes (1) zumindest teilweise die Kondensationswärme des im Dampferzeuger (2) erzeugten Dampfes verwendet wird und daß die anfallenden Rein- und Schmutzkondensate getrennt gesammelt werden.

2) Wirbelbetttrocknungsanlage nach Anspruch 1, dadurch gekennzeichnet, daß zur Beheizung des Wirbelbettes (1) nicht nur die Kondensationswärme des im Dampferzeuger erzeugten Dampfes, sondern auch ein Teil der vom Trockner abziehenden, verdichteten Brüde in getrennten Heizflächen (4, 4a) verwendet wird.

3) Wirbelbetttrocknungsanlage nach Anspruch 1 oder 2, dadurch gekennzeichnet, daß der Brüdenverdichter (5,6) durch die Gegendruckturbine (3) angetrieben wird.

4) Wirbelbetttrocknungsanlage nach Anspruch 3, dadurch gekennzeichnet, daß der Brüdenverdichter (5,6) zweistufig ausgebildet ist, wobei die Niederdruckstufe als Zirkulationsgebläse (5) für das Fluidisierungsmedium und die Stufe höheren Druckes als eigentlicher Brüdenverdichter (6) zur Beheizung des Trockners durch Kondensation ausgebildet ist.

5) Wirbelbetttrocknungsanlage nach Anspruch 2 oder 4, dadurch gekennzeichnet, daß das im Trockner mit höherem als atmosphärischem Druck sich bildende Kondensat entspannt wird und der entstehende Dampf zur Unterstützung des Zirkulationsgebläses (5) nach diesem in das Fluidisierungsmedium eingeleitet wird.

Fig. 1

Fig. 2